# EUROPÄISCHE PATENTSCHRIFT

(11) **EP 4 482 758 B1**
(45) Veröffentlichungstag und Bekanntmachung des Hinweises auf die Patenterteilung: **15.10.2025**
(21) Anmeldenummer: 23706571.9
(22) Anmeldetag: 17.02.2023
(51) Int. Cl.: B65D 43/16, B65D 65/40, B65D 65/42, B65D 65/46

(54) **BEHÄLTNIS MIT WIEDERVERSCHLIESSBAREM DECKEL**
CONTAINER WITH RECLOSEABLE LID
CONTENEUR À COUVERCLE REFERMABLE

(30) Priorität: 25.02.2022 DE 102022104645
(43) Veröffentlichungstag der Anmeldung: 01.01.2025
(60) Teilanmeldung: 25183546.8
(73) Patentinhaber: PAPACKS SALES GmbH, 50829 Köln (DE)
(72) Erfinder: DAG, Tahsin, 50829 Köln (DE)
(74) Vertreter: Freischem & Partner Patentanwälte mbB
(86) Internationale Anmeldenummer: PCT/EP2023/054003
(87) Internationale Veröffentlichungsnummer: WO 2023/161140

(56) Entgegenhaltungen:
- WO-A1-2014/031869
- WO-A1-2016/083437
- GB-A- 2 420 265

## Beschreibung

### Technisches Gebiet

Die Erfindung betrifft ein Behältnis mit einem mindestens eine Öffnung aufweisenden Behälter und einem Deckel zum Verschließen der Öffnung, der über ein elastisch verformbares Scharnier mit dem Behälter verbunden ist.

### Stand der Technik

Derartige Behälter aus Kunststoff sind vielfach im Einsatz, um flüssige Produkte oder ähnliche schüttfähige Ware zu verpacken. Sie bestehen aus Kunststoff, wobei der wiederverschließbare Deckel des Behälters in der Regel über ein Filmscharnier an einen aufgeschraubten Deckelhalter angeformt ist. Der Deckelhalter ist mit dem Behälter verschraubt oder verrastet. Die EP 2 050 685 A1 beschreibt ein Behältnis, nämlich ein kindersicheres Fläschchen, umfassend einen hohlzylindrischen Behälter mit einer Umfangswand und einer Öffnung an einem Ende, wobei als erstes Verbindungselement ein Ring auf der Umfangswand des hohlzylindrischen Behälters angeordnet ist, der über ein Filmscharnier mit einem Deckel verbunden ist. Verbindungselement, Filmscharnier und Deckel bestehen aus Polymer-Material.

Bekanntermaßen sind Verpackungsbehälter aus Kunststoff bedenklich, weil Kunststoff nicht oder nur sehr schwer biologisch abbaubar ist und die Umwelt sowie die Weltmeere verschmutzt.

Es sind auch unbedenkliche Verpackungen aus Faserguss bekannt. Diese Behälter werden in Englisch Pulp Mold Container genannt und werden in einer Saugform aus einer Pulpe geformt. Über die Saugform wird Wasser aus der Pulpe abgesaugt, wodurch in der Pulpe enthaltene Zellstofffasern sich an der Wandung der Saugform ablegen. Der so geformte Behälter wird entwässert und kann zum Verpacken von Flüssigkeiten und Schüttgut verwendet werden. Die EP 1 221 413 A1 beschreibt die Herstellung eines derartigen Faserguss-Behälters. Allerdings wird hier kein gelenkig am Behälter befestigter, wiederverschließbarer Deckel offenbart.

Natürlich sind auch Faserguss-Behälter mit verschwenkbarem Deckel bekannt (vergleiche DE 16 11 944 B1). Hier sind allerdings Eierkartons beschrieben, welche nicht flüssigkeitsdicht sind und daher keine Flüssigkeiten oder feinkörnigen Pulver aufnehmen können. Die GB 2 420 265 A beschreibt einen einstückigen biologisch abbaubaren Trinkbehälter mit einem Becherabschnitt und einem integralen Deckel, der über ein Filmscharnier aus biologisch abbaubarem Material mit dem Becherabschnitt verbunden ist.

Die WO 2014/031869 A1 beschreibt ein Behältnis ähnlich dem Oberbegriff des Anspruchs 1, wobei allerdings nicht ein Behälter und ein Deckel sondern zwei Behälterhälften aus identischem Material über ein Scharnier miteinander verbunden sind.

### Zusammenfassung der Erfindung

Aufgabe der Erfindung gemäß Anspruch 1 ist es, einen biologisch abbaubaren Behälter zu schaffen, der leicht zu handhaben ist und darin aufgenommene Flüssigkeiten und Schüttgüter sicher aufbewahrt, wobei ermöglicht wird, dass ein Käufer erkennen kann, dass die Ware innerhalb des Behälters originalverpackt ist.

Diese Aufgabe wird erfindungsgemäß dadurch gelöst, dass der Behälter aus Faserstoff besteht und eine biologisch abbaubare oder bioinerte Beschichtung aufweist, dass der Deckel aus biologisch abbaubarem thermoplastischem Material besteht und dass ein an dem Deckel befestigter flexibler Scharnierstreifen aus Fasermaterial an den Behälter geklebt ist.

Es wird also ein Faserguss-Behälter vorgeschlagen, der eine biologisch abbaubare oder bioinerte Beschichtung aufweist, so dass der Behälter die Umwelt nicht belasten kann. Biologisch abbaubar sind in der Regel natürliche Beschichtungen wie Lipide, Öle oder Wachse. Bioinert sind z.B. Siliziumdioxid enthaltende Beschichtungen. Ferner wird vorgeschlagen, dass der Deckel aus biologisch abbaubarem thermoplastischen Material besteht. Thermoplastisches Material eignet sich besonders gut für die Herstellung einer Behälterabdeckung. Es ist durch Spritzgießen leicht und sicher in großen Mengen zu verarbeiten. Die Technik eignet sich hervorragend für die Massenherstellung.

Ein derartiges biologisch abbaubares Thermoplast kann insbesondere Stärke und als weitere Bestandteile Glyzerin und Sorbitol als Plastifizierungsmittel aufweisen. Insbesondere 11-15 Gew% Glyzerin und 6-9 Gew% Sorbitol bezogen auf das Gesamtgewicht des Materials in getrocknetem Zustand haben sich als vorteilhaft erwiesen. Dabei liegt die Konzentration der Stärke zwischen 56 und 63 Gew%. Weitere Bestandteile können Füllstoffe in Konzentration von 16-24 Gew% sein. Die Füllstoffe können Talkum, Kreide, Bentonit, Senfsaatschalen, organische Fasern oder Abfallstoffe sein. Dieses Material lässt sich hervorragend im Doppelschneckenextruder verarbeiten und spritzgießen. Es lässt sich durch entsprechende Beschichtungen feuchtigkeitsbeständig und mit einer erheblichen Härte ausbilden. Allerdings ist dieses Material in der Regel zu spröde, um als flexibles Filmscharnier den wiederverschließbaren Deckel mit dem Behälter zu verbinden. Aus diesem Grund wird der Deckel mit einem flexiblen Scharnierstreifen aus Fasermaterial befestigt, der an den Behälter geklebt ist.

Ein derartiger Scharnierstreifen kann aus Papier, insbesondere Kraftpapier, bestehen. Der Scharnierstreifen hat eine erhebliche Festigkeit. Durch entsprechende Beschichtungen kann der Scharnierstreifen feuchtigkeitsbeständig ausgebildet werden. Der Scharnierstreifen kann dekorativ bedruckt werden. Der Scharnierstreifen kombiniert folglich die technisch erforderlichen Merkmale der Flexibilität, so dass der Deckel mehrfach auf- und zugeklappt werden kann, mit positiven ästhetischen Merkmalen. Das Fasermaterial des Scharnierstreifens ist biologisch abbaubar, selbst wenn er feuchtigkeitsbeständig beschichtet ist. Die wiederverschließbare Verpackung mit dem gelenkig angebrachten Deckel ist folglich für die Umwelt unbedenklich und erfüllt höchste funktionale und ästhetische Ansprüche.

In der Praxis kann der Behälter im Bereich seiner Öffnung ein Anschlusselement aus biologisch abbaubarem thermoplastischen Material aufweisen, wobei der Scharnierstreifen mit dem Behälter im Bereich des Anschlusselements verklebt ist. Um die Öffnung des Faserguss-Behälters zu stabilisieren, kann an der Öffnung ein thermoplastisches Anschlusselement vorgesehen sein. Dies kann mit dem Fasergussmaterial des Behälters verklebt oder auf sonstige Weise stoffschlüssig oder formschlüssig verbunden sein. Der Deckel kann an diesem Anschlusselement mittels des Scharnierstreifens festgeklebt sein, wobei sich ein kreisförmiger Vorsprung des Deckels in eine ringförmige Öffnung des Anschlusselements einfügen kann. Vorzugsweise sind am Anschlusselement und am Deckel miteinander zusammenwirkende Vorsprünge und Mulden angeordnet, die eine Schnappverbindung oder Rastverbindung von Deckel und Anschlusselement ermöglichen. Auf diese Weise lässt sich das Behältnis sicher verschließen, wobei der Deckel auch in geöffnetem Zustand über den Scharnierstreifen an dem Anschlusselement gehalten ist.

In der Praxis kann der Scharnierstreifen mit dem Deckel verklebt sein. Es ist aber auch möglich, dass der Scharnierstreifen auf andere Weise mit dem Deckel verbunden ist. Insbesondere kann der Deckel drehbar an dem Scharnierstreifen befestigt sein. Dies ist insbesondere in den Fällen hilfreich, wenn der Deckel mit dem Anschlusselement verschraubbar ist.

In der Praxis kann der Scharnierstreifen mindestens einen zweiten mit dem Behälter verklebten Abschnitt aufweisen, der einen Siegelabschnitt bildet und perforiert ist, so dass er beim Öffnen des Deckels entlang der Perforation getrennt wird. Dieser Siegelabschnitt dient als Originalitätssiegel. Anhand der undurchtrennten Perforation kann ein Käufer erkennen, dass die Ware innerhalb des Behälters originalverpackt ist. Ein geöffneter Behälter lässt sich durch die Zerstörung der Perforation leicht von einem ungeöffneten Behälter unterscheiden.

Wie weiter oben erwähnt, kann der Behälter im Bereich der Öffnung ein Außengewinde aufweisen und der Deckel ein auf das Außengewinde aufschraubbares Innengewinde aufweisen. In diesem Fall ist der Scharnierstreifen drehbar mit den Deckel verbunden. Zum Erreichen einer drehbaren Verbindung kann an den Scharnierstreifen eine Öse angeformt sein, die von einem Abschnitt des Deckels mit kreisförmigen Querschnitt durchragt wird. Beispielsweise kann ein T-förmiger Zapfen oben auf den Deckel geformt sein, der von der Öse umgeben wird. Entweder weist der Scharnierstreifen eine gewisse Elastizität auf, sodass er über den Rand des T-förmigen Zapfens gezogen werden kann und sich elastisch zusammenzieht. Oder aber der T-förmige Zapfen wird zunächst durch die Öse gesteckt und anschließend formschlüssig oder stoffschlüssig mit dem Deckel verbunden.

Zur Steigerung der Dichtigkeit des Behälters kann die Beschichtung mindestens einen der folgenden Bestandteile enthalten:
- Cellulosefasern,
- Kasein,
- Molke,
- Agar Agar,
- Flohsamenschalen
- SiO₂,
- Leinöl,
- Carnaubawachs,
- Bienenwachs.

Zellstofffasern, insbesondere sehr kurze Mikrofibrillen eignen sich zur Steigerung der Dichtigkeit und Gasundurchlässigkeit des Behälters. Füllstoffe und aufquellende natürliche Bestandteile, wie Kaseinmolke, Agar Agar und Flohsamenschalen steigern ebenfalls die Dichtigkeit. Siliziumoxid verleiht dem Behälter eine erhebliche Festigkeit.

Lipide wie Öle und Wachse steigern ebenfalls die Gas- und Flüssigkeitsbeständigkeit des Behältermaterials. Alle gewählten Bestandteile sind biologisch abbaubar oder bioinert, so dass sich der erfindungsgemäße Behälter nach kurzer Zeit zersetzt, ohne dass schädliche Reststoffe übrig bleiben.

Wie erwähnt, ist das thermoplastische Material des Deckels ebenfalls biologisch abbaubar, insbesondere wasserlöslich und/oder kompostierbar. Derartige Eigenschaften lassen sich mit den oben beschriebenen Thermoplasten auf Stärkebasis erzielen.

Das Anschlusselement kann stoffschlüssig oder auch formschlüssig mit dem Behälter verbunden sein. Das thermoplastische Material kann durch Befeuchtung mit Wasser oder einem Lösungsmittel klebende Eigenschaften entwickeln und mit dem Faserstoff des Behälters verklebt werden. Es ist auch möglich, dass das Anschlusselement eine dünne Verbindungswand aufweist, die mit Durchbrüchen versehen ist. Die Verbindungswand wird beim Herstellungsprozess für den Faserguss-Behälter nahe der Wandung der Saugform gehalten, so dass sich durch die Saugform angesaugtes Fasermaterial auch im Bereich der Verbindungswand absetzt und die Durchbrüche durchragt. Hierdurch lässt sich ein hervorragender inniger Verbund zwischen dem Anschlusselement und dem Fasermaterial des Behälters erzielen. Die Verbindungswand kann dabei die Öffnung umgeben, so dass entlang des gesamten Umfangs der Öffnung die formschlüssige Verbindung erzielt wird.

Die Erfindung betrifft ferner ein Verfahren gemäß Anspruch 9 zur Herstellung eines Behältnisses mit einem mindestens eine Öffnung aufweisenden Behälter und einem Deckel zum Verschließen der Öffnung, der über ein elastisch verformbares Scharnier mit dem Behälter verbunden ist. Das Verfahren umfasst folgende Verfahrensschritte:
- Ansaugen von Fasermaterial aus einer Pulpe durch eine Saugform und Verdichten des an der Innenwand der Saugform abgelagerten Fasermaterials zur Bildung des Behälters;
- Entwässern und Trocknen des Behälters;
- Beschichten des Behälters;
- Spritzgießen des Deckels aus biologisch abbaubarem thermoplastischem Material;
- Befestigen des Deckels an einem flexiblen Scharnierstreifen aus Fasermaterial;
- Festkleben des Scharnierstreifens an dem Behälter.

Die verschiedenen Bestandteile des Behältnisses lassen sich auf diese Weise effizient und kostengünstig herstellen und miteinander verbinden.

In der Praxis kann an dem Behälter im Bereich der Öffnung das Anschlusselement aus biologisch abbaubarem thermoplastischem Material angeordnet werden, wobei der Scharnierstreifen mit dem Behälter im Bereich des Anschlusselements verklebt wird.

Der Deckel und das Anschlusselement aus thermoplastischen Material können eine Schnappverbindung oder Rastverbindung bilden, mit denen sich das Behältnis verschließen lässt.

In geöffnetem Zustand ist der Deckel über den Scharnierstreifen mit dem Anschlusselement verbunden.

Wie weiter oben erwähnt, kann der Scharnierstreifen mit dem Deckel verklebt werden.

Ferner kann der Scharnierstreifen mindestens einen zweiten mit dem Behälter verklebten Abschnitt, nämlich einen Siegelabschnitt aufweisen, der perforiert wird und beim Öffnen des Deckels entlang der Perforation getrennt wird. Der Scharnierstreifen bildet auf diese Weise ein Originalitätssiegel.

Schließlich kann der Behälter im Bereich der Öffnung ein Außengewinde aufweisen und der Deckel ein auf das Außengewinde aufschraubbares Innengewinde aufweisen, wobei der Deckel mit dem Scharnierstreifen drehbar verbunden wird.

### Kurze Beschreibung der Zeichnungen

Fig. 1 zeigt eine seitliche Explosionsansicht eines erfindungsgemäßen Behältnisses.
Fig. 2 zeigt eine dreidimensionale Explosionsansicht des Behältnisses aus Fig. 1 von oben.
Fig. 3 zeigt die Vorderansicht des Behältnisses aus den Fig. 1 und 2.
Fig. 4 zeigt die entlang Schnittlinie IV - IV geschnittene Ansicht des Behältnisses aus Fig. 3.
Fig. 5 zeigt eine weitere Ausführungsform des Scharnierstreifens für das Behältnis.
Fig. 6 zeigt eine Vorderansicht des Behältnisses mit dem Scharnierstreifen aus Fig. 5.
Fig. 7 zeigt eine Seitenansicht des Behältnisses mit dem Scharnierstreifen aus Fig. 5.
Fig. 8 zeigt eine der Fig. 7 entsprechende Ansicht des Behältnisses mit aufgeschwenktem Deckel.
Fig. 9 zeigt eine Unteransicht des Deckels des Behältnisses mit einer weiteren Ausführungsform des Scharnierstreifens.
Fig. 10 zeigt eine der Fig. 4 entsprechende Schnittansicht des Behältnisses mit dem Scharnierstreifen aus Fig. 9.
Fig. 11 zeigt eine der Fig. 10 entsprechende Ansicht des Behältnisses mit aufgeschwenktem Deckel.

### Beschreibung der Ausführungsformen

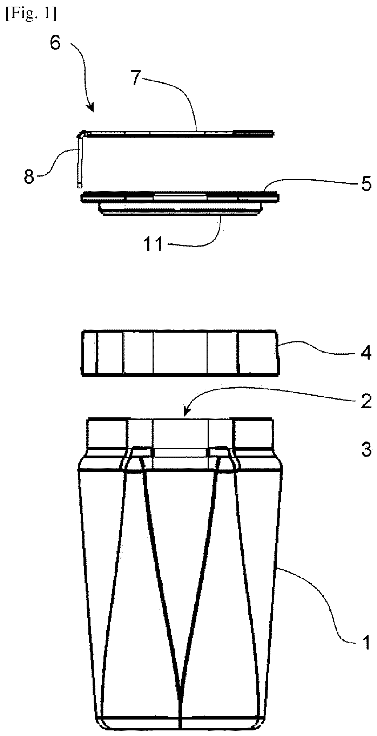

In den Fig. 1 bis Fig. 4 ist eine erste Ausführungsform des Behältnisses dargestellt. In Fig. 1 ist eine Explosionsansicht der Bestandteile eines Behältnisses zu erkennen, das der Verpackung von Kaugummis dient. Das Behältnis setzt sich zusammen aus einem Behälter 1, der aus einem oben offenen Hohlkörper aus Faserguss besteht. Die Öffnung 2 des Behälters 1 wird von einem Rand 3 umgeben, der sich im Wesentlichen vertikal nach oben erstreckt und mit einem Anschlusselement 4 verbunden wird. Das Anschlusselement 4 besteht aus einem biologisch abbaubaren Thermoplast, insbesondere einem auf Stärkebasis erzeugten Thermoplast mit den eingangs beschriebenen Bestandteilen. Dieses Anschlusselement 4 aus Thermoplast kann im Spritzgießverfahren hergestellt und im Wesentlichen dicht mit dem Rand 3 des Behälters 1 verbunden werden. Das Anschlusselement 4 kann mit einem Deckel 5 verschlossen werden, der ebenfalls aus einem biologisch abbaubaren Thermoplast im Spritzgießverfahren hergestellt ist.

Bei üblichen Kunststoffbehältern sind derartige spritzgegossene Teile wie das Anschlusselement 4 und der Deckel 5 mittels eines Filmscharniers miteinander schwenkbar verbunden, welches aus dem gleichen Thermoplast besteht. Das biologisch abbaubare Thermoplast auf Stärkebasis hat aber meist eine zu geringe Elastizität, um zuverlässig ein Filmscharnier zwischen Deckel 5 und Anschlusselement 4 zu bilden. Aus diesem Grund ist ein flexibler Scharnierstreifen 6 aus Papier, insbesondere Kraftpapier vorgesehen, der den Deckel 5 mit den Behälter 1 und insbesondere mit dem Anschlusselement 4 des Behälters 1, schwenkbar verbindet. Der Scharnierstreifen 6 weist einen in der Fig. 1 sich parallel zur Oberseite des Deckels 5 erstreckenden Hauptabschnitt 7 auf, der auf die Oberseite des Deckels 5 geklebt wird. In der Fig. 1 auf der linken Seite ist ein Seitenabschnitt 8 des Scharnierstreifens 6 zu erkennen, der rechtwinklig nach unten abgewinkelt ist. Dieser Seitenabschnitt 8 ist mit dem Anschlusselement 4 des Behälters 1 verklebt.

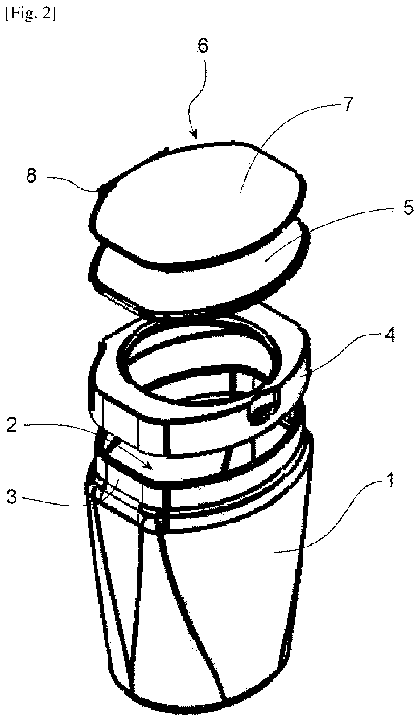

In Fig. 2 ist zu erkennen, dass die Breite des Hauptabschnitts 7 des Scharnierstreifens 6 größer ist als die Breite des Seitenabschnitts 8. Der Hauptabschnitt 7 des Scharnierstreifens 6 weist eine der Oberseite des Deckels 5 entsprechende Kontur auf und ist auf die Oberseite des Deckels 5 aufgeklebt. Das biologisch abbaubare Thermoplast kann wasserlöslich oder alkohollöslich sein. In diesem Fall kann der Hauptabschnitt 7 des Scharnierstreifens 6 durch Anlösen der Oberseite des Deckels 5 und nachfolgendes Trocknen der Oberseite des Deckels 5 verklebt werden. Auf die gleiche Weise kann die Innenseite des ringförmigen Anschlusselements 4 mit dem Rand 3 des Behälters 1 verklebt sein. Die Außenseite des Anschlusselements 4 kann mit dem Seitenabschnitt 8 des Scharnierstreifens 6 verklebt sein.

Alternativ kann ein Leim oder anderer geeigneter biologisch abbaubarer Klebstoff verwendet werden, um den Scharnierstreifen 6 mit den Deckel 5 und dem Anschlusselement 4 zu verkleben.

Die gelenkige Verbindung zwischen dem Deckel 5 und dem Anschlusselement 4 entsteht im Wesentlichen durch den streifenförmigen Seitenabschnitt 8 des Scharnierstreifens 6. Wenn der Hauptabschnitt 7 des Scharnierstreifens 6 die gesamte Oberfläche des Deckels 5 bedeckt, kann der Scharnierstreifen 6 bedruckt werden und die Produktinformationen wiedergeben. Es ist aber auch möglich, dass der Hauptabschnitt 7 des Scharnierstreifens 6 sich nicht über die gesamte Oberseite des Deckels 5 erstreckt.

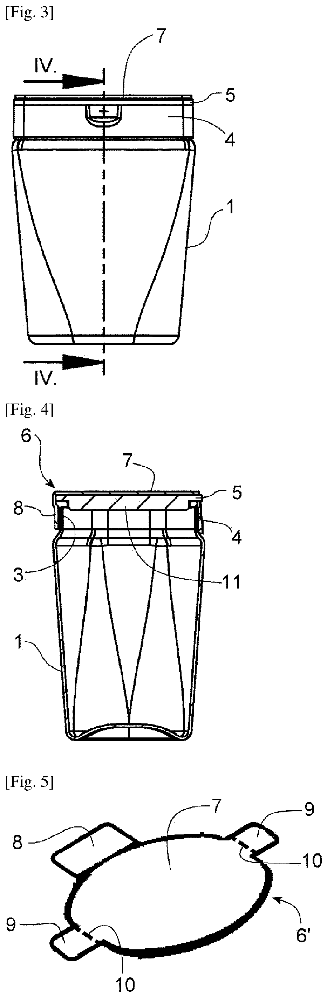

Die Fig. 3 und 4 zeigen eine Vorderansicht und eine geschnittene Seitenansicht des Behältnisses aus den Fig. 1 und 2. Es ist zu erkennen, dass der Deckel 5 einen flachen Rand und in der Mitte einen nach unten vorspringenden kreisförmigen Abschnitt 11 aufweist. Der kreisförmige Abschnitt 11 des Deckels 5 kann eine Rastverbindung oder Schnappverbindung mit dem inneren Umfang des ringförmigen Anschlusselements 4 bilden. Insbesondere in Fig. 4 ist zu erkennen, dass der Seitenabschnitt 8 des Scharnierstreifens 6 mit der Außenseite des Anschlusselements 4 verklebt ist. Auf diese Weise wird der Deckel 5 nach dem Öffnen sicher an dem Anschlusselement 4 des Behältnisses gehalten.

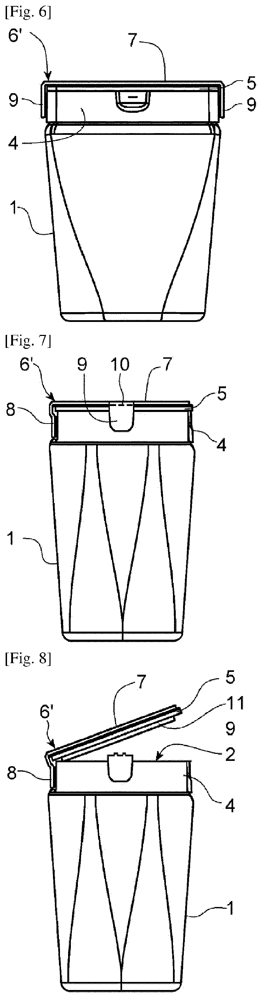

In den Fig. 5 bis 8 ist eine zweite Ausführungsform des Scharnierstreifens 6' zu erkennen. Dieser weist wie bei der zuvor beschriebenen Ausführungsform einen Hauptabschnitt 7 und einen Seitenabschnitt 8 auf. Der Seitenabschnitt 8 befindet sich hier noch in der gleichen Ebene wie der Hauptabschnitt 7 und ist nicht wie in Fig. 1 um 90° umgeknickt. Der Scharnierstreifen 6' weist zwei seitliche Siegelabschnitte 9 auf, die sich über eine Perforation 10, d. h., eine Linie, entlang der die Verbindung zwischen dem Siegelabschnitt 9 und dem Hauptabschnitt 7 teilweise durchtrennt ist, verbunden ist. Wie in den Fig. 6 und 7 zu erkennen, werden die Siegelabschnitte 9 im Bereich der Seite des Behälters 1 mit dessen Anschlusselement 4 verklebt. Beim Öffnen des Deckels 5 trennen sich die Siegelabschnitte 9 von dem Hauptabschnitt 7 des Scharnierstreifens 6 entlang der Perforation 10. Dies ist in Fig. 8 zu erkennen, die den aufgeschwenkten Deckel 5 zeigt. Die Siegelstreifen 9 stellen folglich Originalitätssiegel dar, anhand derer zu erkennen ist, dass das Behältnis geöffnet wurde.

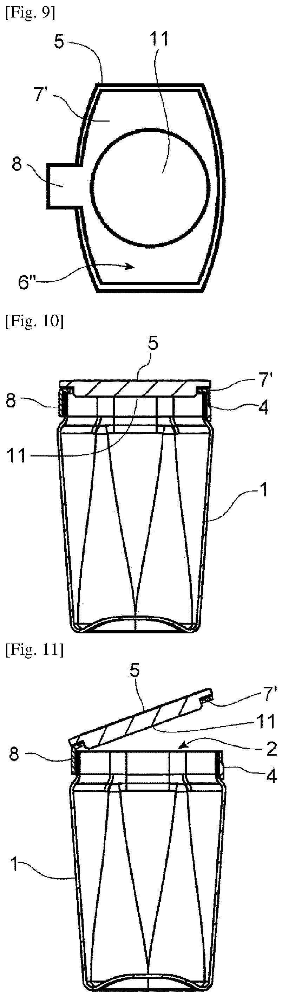

Die Fig. 9 zeigt eine Unteransicht des Deckels 5 mit einer weiteren Ausführungsform des Scharnierstreiten 6". Der Hauptabschnitt 7' der Scharnierstreifens 6" hat die Form einer Öse, d.h. er weist in seiner Mitte eine kreisförmige Aussparung auf, welche durch den kreisrunden Vorsprung des Deckels 5 durchragt wird. Der Hauptabschnitt 7 des Scharnierstreifens 6" ist somit gegen die bei geschlossenem Behältnis (Fig. 10) nach unten weisende Fläche des Deckels 5 geklebt, wobei sein Seitenabschnitt 8 weiterhin gegen den oberen Rand des Behälters 1 geklebt ist. Der Scharnierstreifen 6" hält den in Fig. 11 erkennbaren, geöffneten Deckel 5 fest an dem Behälter 1.

Falls der Deckel ein Schraubgewinde aufweist (nicht dargestellt), das mit dem Anschlusselement verschraubbar ist, kann auf die Verklebung zwischen Scharnierstreifen 6" und Deckel 5 verzichtet werden. In diesem Fall kann der vorspringende kreisförmige Abschnitt 11 des Deckels 5 an seinem Umfang eine Rille oder Nut aufweisen, in welche sich der ring- oder ösenförmige Hauptabschnitt des Scharnierstreifens einfügt. Der Deckel 5 ist dadurch drehbar mit dem Scharnierstreifen 6" verbunden.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Liste der Bezugszeichen

- 1: Behälter
- 2: Öffnung
- 3: Rand
- 4: Anschlusselement
- 5: Deckel
- 6,6',6": Scharnierstreifen
- 7,7': Hauptabschnitt
- 8: Seitenabschnitt
- 9: Siegelabschnitt
- 10: Perforation
- 11: kreisförmiger Abschnitt

## Patentansprüche

1. Behältnis mit einem mindestens eine Öffnung (2) aufweisenden Behälter (1) und einem Deckel (5) zum Verschließen der Öffnung (2), der über ein elastisch verformbares Scharnier mit dem Behälter (1) verbunden ist, wobei der Behälter (1) aus Faserstoff besteht und eine biologisch abbaubare oder bioinerte Beschichtung aufweist, wobei der Deckel (5) aus biologisch abbaubarem thermoplastischem Material besteht, **dadurch gekennzeichnet, dass** ein an dem Deckel (5) befestigter flexibler Scharnierstreifen (6') aus Fasermaterial an den Behälter (1) geklebt ist, wobei der Scharnierstreifen (6') mit dem Deckel (5) verklebt ist und mindestens einen mit dem Behälter (1) verklebten Siegelabschnitt (9) aufweist, der perforiert ist und beim Öffnen des Deckels (5) entlang der Perforation (10) getrennt wird.

2. Behältnis nach Anspruch 1, **dadurch gekennzeichnet, dass** der Behälter (1) im Bereich der Öffnung (2) ein Anschlusselement (4) aus biologisch abbaubarem thermoplastischem Material aufweist, wobei der Scharnierstreifen (6, 6', 6") mit dem Behälter (1) im Bereich des Anschlusselements (4) verklebt ist.

3. Behältnis nach Anspruch 1 oder 2, **dadurch gekennzeichnet, dass** der Behälter (1) im Bereich der Öffnung (2) ein Außengewinde aufweist und der Deckel (5) ein auf das Außengewinde aufschraubbares Innengewinde aufweist, wobei der Deckel (5) drehbar mit dem Scharnierstreifen verbunden ist.

4. Behältnis nach Anspruch 5, **dadurch gekennzeichnet, dass** an dem Scharnierstreifen (6, 6', 6") eine Öse angeformt ist, die von einem Abschnitt (11) des Deckels (5) mit kreisförmigem Querschnitt durchragt wird.

5. Behältnis nach einem der vorangehenden Ansprüche, **dadurch gekennzeichnet, dass** die Beschichtung mindestens einen der folgenden Bestandteile enthält:
- Cellulosefasern,
- Kasein,
- Molke,
- Agar Agar,
- Flohsamenschalen,
- SiO2,
- Leinöl,
- Carnaubawachs,
- Bienenwachs.

6. Behältnis nach einem der vorangehenden Ansprüche, **dadurch gekennzeichnet, dass** das thermoplastische Material des Deckels (5) und/oder des Anschlusselements (4) wasserlöslich und/oder kompostierbar ist.

7. Behältnis nach einem der vorangehenden Ansprüche, **dadurch gekennzeichnet, dass** das Anschlusselement (4) stoffschlüssig und/oder formschlüssig mit dem Behälter (1) verbunden ist

8. Behältnis nach einem der vorangehenden Ansprüche, **dadurch gekennzeichnet, dass** das Anschlusselement (4) eine die Öffnung (2) umgebende Verbindungswand mit Durchbrüchen aufweist, welche von dem Faserstoff des Behälters (1) durchragt werden.

9. Verfahren zur Herstellung eines Behältnisses mit einem mindestens eine Öffnung (2) aufweisenden Behälter (1) und einem Deckel (5) zum Verschließen der Öffnung (2), der über ein elastisch verformbares Scharnier mit dem Behälter (1) verbunden ist, wobei das Verfahren folgende Verfahrensschritte umfasst:
Ansaugen von Fasermaterial aus einer Pulpe durch eine Saugform und Verdichten des an der Innenwand der Saugform abgelagerten Fasermaterials zur Bildung des Behälters (1);
Entwässern und Trocknen des Behälters (1);
Beschichten des Behälters (1);
Spritzgießen des Deckels (5) aus biologisch abbaubarem thermoplastischem Material;
Befestigen des Deckels (5) an einem flexiblen Scharnierstreifen (6, 6', 6") aus Fasermaterial;
Festkleben des Scharnierstreifens (6) an dem Behälter (1), wobei der Scharnierstreifen (6) mit dem Deckel (5) verklebt wird und mindestens einen mit dem Behälter (1) verklebten Siegelabschnitt (9) aufweist, der perforiert wird und beim Öffnen des Deckels (5) entlang der Perforation (10) getrennt wird.

10. Verfahren nach Anspruch 9, **dadurch gekennzeichnet, dass** an dem Behälter (1) im Bereich der Öffnung (2) ein Anschlusselement (4) aus biologisch abbaubarem thermoplastischem Material angeordnet wird und dass der Scharnierstreifen (6, 6', 6") mit dem Behälter (1) im Bereich des Anschlusselements (4) verklebt wird.

11. Verfahren nach Anspruch 9 oder 10, **dadurch gekennzeichnet, dass** der Behälter (1) im Bereich der Öffnung (2) ein Außengewinde aufweist und der Deckel (5) ein auf das Außengewinde aufschraubbares Innengewinde aufweist, wobei der Deckel (5) drehbar mit dem Scharnierstreifen verbunden wird.

## Claims

1. A receptacle with a container (1) having at least one opening (2) and a lid (5) for closing the opening (2), which lid is connected to the container (1) by an elastically deformable hinge, wherein the container (1) is made of fiber material and has a biodegradable or bioinert coating, wherein the lid (5) is made of biodegradable thermoplastic material, **characterized in that** a flexible hinge strip (6') of fiber material attached to the lid (5) is bonded to the container (1), wherein the hinge strip (6') is bonded to the lid (5) and comprises at least one seal section (9) bonded to the container (1), perforated and separated along the perforation (10) when the lid (5) is opened.

2. The receptacle according to claim 1, **characterized in that** the container (1) has a connection element (4) made of biodegradable thermoplastic material in the area of the opening (2), the hinge strip (6, 6', 6") being bonded to the container (1) in the area of the connection element (4).

3. The receptacle according to claim 1 or 2, **characterized in that** the container (1) has an external thread in the area of the opening (2) and the lid (5) has an internal thread which can be screwed onto the external thread, the lid (5) being rotatably connected to the hinge strip.

4. The receptacle according to claim 5, **characterized in that** an eyelet is formed on the hinge strip (6, 6', 6") through which eyelet a section (11) of the lid (5) having a circular cross-section extends.

5. The receptacle according to any one of the preceding claims, **characterized in that** the coating comprises at least one of the following constituents:
- cellulose fibers,
- casein,
- whey,
- agar agar,
- psyllium husks,
- SiO₂,
- linseed oil,
- carnauba wax,
- beeswax.

6. The receptacle according to one of the preceding claims, **characterized in that** the thermoplastic material of the lid (5) and/or of the connection element (4) is water-soluble and/or compostable.

7. The receptacle according to one of the preceding claims, **characterized in that** the connection element (4) is connected to the container (1) by substance bonding and/or form-fitting.

8. The receptacle according to one of the preceding claims, **characterized in that** connection element (4) has a connecting wall surrounding the opening (2) and having holes through which the fiber material of the container (1) extends.

9. Method for producing a receptacle with a container (1) having at least one opening (2) and a lid (5) for closing the opening (2), which lid is connected to the container (1) via an elastically deformable hinge, the method comprising the following steps:
- sucking fiber material from a pulp through a suction mold and compacting the fiber material deposited on the inner wall of the suction mold to form the container (1);
- dewatering and drying the container (1);
- coating of the container (1);
- injection molding of the lid (5) from biodegradable thermoplastic material;
- fastening the lid (5) to a flexible hinge strip (6, 6', 6") made of fiber material;
- bonding the hinge strip (6) to the container (1),
wherein the hinge strip (6') is bonded to the lid (5) and comprises at least one seal section (9) bonded to the container (1), perforated and separated along the perforation (10) when the lid (5) is opened.

10. Method according to claim 9, **characterized in that** a connection element (4) made of biodegradable thermoplastic material is arranged on the container (1) in the area of the opening (2), and **in that** the hinge strip (6, 6', 6") is bonded to the container (1) in the area of the connection element (4).

11. Method according to claim 9 or 10, **characterized in that** the container (1) has an external thread in the area of the opening (2) and the lid (5) has an internal thread which can be screwed onto the external thread, the lid (5) being rotatably connected to the hinge strip.

## Revendications

1. Récipient avec un contenant (1) présentant au moins une ouverture (2) et un couvercle (5) pour fermer l'ouverture (2), qui est relié au contenant (1) par l'intermédiaire d'une charnière élastiquement déformable, le contenant (1) étant constitué de matière fibreuse et présentant un revêtement biodégradable ou bioinerte, le couvercle (5) étant constitué de matériau thermoplastique biodégradable, **caractérisé en ce qu'**une bande charnière flexible (6') en matériau fibreux fixée au couvercle (5) est collée au contenant (1), la bande charnière (6') étant collée au couvercle (5) et présentant au moins une section de scellage (9) collée au contenant (1), qui est perforée et se sépare le long de la perforation (10) lors de l'ouverture du couvercle (5).

2. Récipient selon la revendication 1, **caractérisé en ce que** le contenant (1) présente dans la zone de l'ouverture (2) un élément de raccordement (4) en matériau thermoplastique biodégradable, la bande charnière (6, 6', 6") étant collée au contenant (1) dans la zone de l'élément de raccordement (4).

3. Récipient selon la revendication 1 ou 2, **caractérisé en ce que** le contenant (1) présente un filetage extérieur dans la zone de l'ouverture (2) et le couvercle (5) présente un filetage intérieur pouvant être vissé sur le filetage extérieur, le couvercle (5) étant relié de manière rotative à la bande charnière.

4. Récipient selon la revendication 5, **caractérisé en ce qu'**un oeillet est formé sur la bande charnière (6, 6', 6"), qui est traversé par une section (11) du couvercle (5) de section circulaire.

5. Récipient selon l'une quelconque des revendications précédentes, **caractérisé en ce que** le revêtement contient au moins l'un des constituants suivants :
- fibres de cellulose,
- caséine,
- lactosérum,
- agar-agar,
- téguments de psyllium,
- SiO2,
- huile de lin,
- cire de carnauba,
- cire d'abeille.

6. Récipient selon l'une quelconque des revendications précédentes, **caractérisé en ce que** le matériau thermoplastique du couvercle (5) et/ou de l'élément de raccordement (4) est soluble dans l'eau et/ou compostable.

7. Récipient selon l'une quelconque des revendications précédentes, **caractérisé en ce que** l'élément de raccordement (4) est relié au contenant (1) par liaison de matière et/ou par complémentarité de forme.

8. Récipient selon l'une quelconque des revendications précédentes, **caractérisé en ce que** l'élément de raccordement (4) présente une paroi de liaison entourant l'ouverture (2) avec des ajours qui sont traversés par la matière fibreuse du contenant (1).

9. Procédé de fabrication d'un récipient avec un contenant (1) présentant au moins une ouverture (2) et un couvercle (5) pour fermer l'ouverture (2), qui est relié au contenant (1) par l'intermédiaire d'une charnière déformable élastiquement, le procédé comprenant les étapes de procédé suivantes :
l'aspiration de matériau fibreux à partir d'une pâte à travers un moule d'aspiration et le compactage du matériau fibreux déposé sur la paroi intérieure du moule d'aspiration pour former le contenant (1) ;
la déshydratation et le séchage du contenant (1) ;
le revêtement du contenant (1) ;
le moulage par injection du couvercle (5) en matériau thermoplastique biodégradable ;
la fixation du couvercle (5) à une bande charnière flexible (6, 6', 6") en matériau fibreux ;
le collage de la bande charnière (6) sur le contenant (1), la bande charnière (6) étant collée au couvercle (5) et présentant au moins une section de scellage (9) collée au contenant (1), qui est perforée et séparée le long de la perforation (10) lors de l'ouverture du couvercle (5).

10. Procédé selon la revendication 9, **caractérisé en ce qu'**un élément de raccordement (4) en matériau thermoplastique biodégradable est agencé sur le contenant (1) dans la zone de l'ouverture (2) et **en ce que** la bande charnière (6, 6', 6") est collée au contenant (1) dans la zone de l'élément de raccordement (4).

11. Procédé selon la revendication 9 ou 10, **caractérisé en ce que** le contenant (1) présente un filetage extérieur dans la zone de l'ouverture (2) et le couvercle (5) présente un filetage intérieur pouvant être vissé sur le filetage extérieur, le couvercle (5) étant relié de manière rotative à la bande charnière.
